# FASCICULE DE BREVET EUROPEEN

(11) **EP 1 923 452 B1**
(45) Date de publication et mention de la délivrance du brevet: **04.10.2017**
(21) Numéro de dépôt: 07291265.2
(22) Date de dépôt: 15.10.2007
(51) Int. Cl.: C10G 67/06, C10G 25/05, C10G 45/02

(54) **Procédé de désulfuration profonde des essences de craquage avec une faible perte en indice d'octane**
Verfahren zur Tiefenentschwefelung von Krack-Benzinstoffen mit einem geringen Oktanzahlverlust
Method of deep sulphur removal from cracked petrol with minimum loss of octane number

(30) Priorité: 16.11.2006 FR 0610111
(43) Date de publication de la demande: 21.05.2008
(73) Titulaire: IFP Énergies nouvelles, 92852 Rueil-Malmaison Cedex (FR)
(72) Inventeur: Nicolaos, Alexandre, 69003 Lyon (FR); Picard, Florent, 69360 Communay (FR); Debuisschert, Quentin, 92500 Rueil-Malmaison (FR); Pucci, Annick, 78290 Croissy-sur-Seine (FR)

(56) Documents cités:
- WO-A-93/12204
- WO-A-02/053684
- GB-A- 1 098 698
- US-A- 4 419 224
- US-A- 4 634 515
- US-A- 5 106 484
- US-A1- 2004 044 262
- US-A1- 2005 252 831
- US-B1- 6 228 254

## Description

La présente invention se rapporte à un procédé permettant de diminuer les teneurs en soufre contenus de manière générale dans les essences et de façon préférée, dans les essences de craquage tout en préservant un indice d'octane élevé et en minimisant la consommation d'hydrogène.

Les spécifications sur les carburants automobiles prévoient une forte diminution de la teneur en soufre dans ces carburants, et notamment sur les essences. Cette diminution est destinée à limiter, notamment la teneur en oxyde de soufre et d'azote dans les gaz d'échappement d'automobiles. La législation européenne précise les spécifications des carburants essences qui sont depuis 2005 de 50 ppm de soufre et seront en 2009 de 10 ppm de soufre. Pour atteindre ces spécifications, il est nécessaire de traiter les essences afin d'en diminuer la teneur en soufre.

Les sources principales de soufre dans les bases pour essences sont les essences dites de craquage, et principalement, la fraction d'essence issue d'un procédé de craquage catalytique d'un résidu de la distillation atmosphérique ou sous vide d'un pétrole brut. La fraction d'essence issue du craquage catalytique, qui représente en moyenne 40 % des bases essence, contribue en effet pour plus de 90% à l'apport de soufre dans les essences. Par conséquent, la production d'essences peu soufrées nécessite une étape de désulfuration des essences de craquage catalytique. Parmi les autres sources d'essence riches en soufre, citons également les essences de coker, de visbreaker ou, dans une moindre mesure, les essences issues de la distillation atmosphérique ou les essences de vapocraquage.

La diminution de la teneur en soufre dans les essences peut être obtenue en approvisionnant la raffinerie en pétroles bruts pauvres en soufre, mais la raréfaction du pétrole incite de plus en plus les raffineurs à acheter des bruts à haute teneur en soufre. Parmi les autres voies possibles pour produire des carburants à faible teneur en soufre, celle qui a été très largement retenue consiste à traiter spécifiquement les bases essences riches en soufre par des procédés d'hydrodésulfuration en présence d'hydrogène. Les procédés traditionnels désulfurent les essences de manière non sélective en hydrogénant une grande partie des mono-oléfines, ce qui engendre une forte perte en indice d'octane et une forte consommation d'hydrogène. Les procédés les plus récents, tels que le procédé Prime G+ (marque commerciale), permettent de désulfurer les essences de craquage riches en oléfines, tout en limitant l'hydrogénation des mono-oléfines et par conséquent la perte d'octane et la forte consommation d'hydrogène qui en résulte. De tels procédés sont par exemples décrits dans les demandes de brevet EP-A-1077247 et EP-A-1174485. Toutefois, dans le cas où l'on doit désulfurer les essences de craquage de manière très profonde, une partie des oléfines présentes dans les essences de craquage est hydrogénée d'une part et se recombine avec l'H2S pour former des mercaptans d'autre part.

L'hydrodésulfuration des essences de craquage qui contiennent des mono-oléfines, consiste à faire passer, sur un catalyseur de type sulfure de métal, la charge à traiter mélangée à de l'hydrogène, afin de promouvoir les réactions de réduction du soufre en sulfure d'hydrogène (H₂S). Le mélange réactionnel est ensuite refroidi afin de condenser l'essence. La phase gazeuse contenant l'excès d'hydrogène et l'H₂S est séparée et l'essence désulfurée est récupérée.

Les composés soufrés résiduels généralement présents dans l'essence désulfurée peuvent être séparés en deux familles distinctes : les composés soufrés non hydrogénés présents dans la charge d'une part, et les composés soufrés formés dans le réacteur par des réactions secondaires dites de recombinaison. Parmi cette dernière famille de composés soufrés, les composés majoritaires sont les mercaptans issus de l'addition de l'H₂S formé dans le réacteur sur les mono-oléfines présentes dans la charge. Les mercaptans de formule chimique R-SH où R est un groupement alkyle, sont également appelés mercaptans de recombinaison, et représentent généralement entre 20% poids et 80% poids du soufre résiduel dans les essences désulfurées.

La réduction de la teneur en mercaptans de recombinaison peut être réalisée par hydrodésulfuration catalytique, mais cela entraîne l'hydrogénation d'une partie importante des mono-oléfines présentes dans l'essence, ce qui entraîne alors une forte diminution de l'indice d'octane de l'essence ainsi qu'une surconsommation d'hydrogène. Il est par ailleurs connu que la perte d'octane liée à l'hydrogénation des mono-oléfines lors de l'étape d'hydrodésulfuration est d'autant plus grande que la teneur en soufre visée est basse, c'est-à-dire que l'on cherche à éliminer en profondeur les composés soufrés présents dans la charge.

Pour ces raisons, il est alors préférable de traiter cette essence partiellement hydrodésulfurée par une technique d'adsorption judicieusement choisie qui permettra d'éliminer à la fois les composés soufrés initialement présents dans les essences de craquage et non convertis et les mercaptans de recombinaison, ceci sans hydrogéner les mono-oléfines présentes, afin de préserver l'indice d'octane.

Différentes solutions sont décrites dans la littérature pour désulfurer les essences de craquage à l'aide de procédés de type adsorption ou par combinaison d'étapes d'hydrodésulfuration ou d'adsorption.

Par exemple, la demande de brevet US20030188992 décrit comment désulfurer les essences oléfiniques en traitant l'essence dans une première étape d'hydrodésulfuration, puis en éliminant les composés soufrés de type mercaptans au cours d'une étape de finition. Cette étape de finition consiste principalement en une extraction des mercaptans par solvant par lavage.

Le brevet US5866749 propose une solution pour éliminer le soufre élémentaire et les mercaptans contenus dans une coupe oléfinique en faisant passer le mélange à traiter sur un métal réduit choisi parmi les groupes IB, IIB, IIIA du tableau périodique et mis en oeuvre à une température inférieure à 37°C.

Le brevet US6579444 présente un procédé destiné à éliminer le soufre présent dans les essences ou le soufre résiduel présent dans les essences partiellement désulfurées basé sur l'utilisation d'un solide contenant du cobalt ainsi qu'un métal du groupe VI.

La demande de brevet US2003/0226786 présente un procédé de désulfuration d'essence par adsorption ainsi que les méthodes pour régénérer l'adsorbant. L'adsorbant envisagé est tout catalyseur d'hydrotraitement et plus particulièrement les solides contenant un métal du groupe VIII seul ou en mélange avec un métal du groupe VI et contenant entre 2% et 20% poids de métal du groupe VIII.

Les demandes de brevet US 2004/0044262, WO 02/053684, WO 93/12204 et US 2005/0252831 ainsi que les brevets US 5106484, GB 1098698 et US 6228254 décrivent des procédés de traitement de fractions hydrocarbonées contenant du soufre mais ne décrivent pas la combinaison des teneurs en Nickel réduit supérieure à 40% poids avec la mise en oeuvre de l'adsorbant sous forme réduite en absence d'hydrogène à une température comprise entre 40°C et 300°C. Les demandes de brevets US 4634515 et US 4419224 décrivent des procédés de captation des composés soufrés avec un adsorbant comprenant du nickel.

### Résumé de l'invention

L'invention porte sur un procédé de traitement d'une essence contenant du soufre et des composés oléfiniques décrit par la revendication 1. En raison de l'étape de captation en aval de l'étape d'hydrodésulfuration, les conditions opératoires de l'étape d'hydrodésulfuration sont beaucoup moins sévères (par exemple, diminution importante de la température et/ou de la pression opératoire) ce qui engendre une amélioration de la durée de vie du catalyseur de l'étape d'hydrodésulfuration ainsi que de la consommation d'énergie.

### Description détaillée de l'invention

Il a été découvert qu'il est possible d'utiliser nickel dans des conditions particulières afin d'éliminer par adsorption les différents composés soufrés résiduels issus d'une première étape d'hydrodésulfuration. Ce métal est déposé sur un support et réduit avant utilisation. Il peut alors capter par chimisorption à la fois les composés soufrés tels que les mercaptans ainsi que les composés non convertis tels que les thiophéniques à condition d'utiliser une température assez élevée au moins supérieure à 40°C, de préférence supérieure à 50°C, de façon préférée supérieure à 75°C et de façon très préférée supérieure à 100°C. Une fois l'adsorbant saturé de soufre, il peut être remplacé par un nouvel adsorbant réduit. Le dispositif d'adsorption du soufre comprend donc généralement un ou plusieurs réacteurs afin de permettre une opération en continue.

La présente invention propose donc un procédé de désulfuration profonde d'une essence, et est particulièrement adaptée au traitement des essences de craquage contenant des oléfines. L'invention consiste en l'enchaînement d'au moins une hydrodésulfuration catalytique suivie d'au moins une étape de désulfuration par adsorption destinée à éliminer à la fois les mercaptans de recombinaison et les soufrés non convertis afin de limiter la perte en octane de l'essence à traiter.

### -Description de la charge :

La charge est une essence contenant des composés oléfiniques. La charge est une coupe essence et plus précisément une coupe essence issue d'un procédé de craquage catalytique. Toute essence issue d'un procédé de craquage quel qu'il soit pourra être utilisée comme charge. En effet, ces essences contiennent des composés oléfiniques et il est nécessaire de désulfurer ces essences tout en préservant leur indice d'octane.

La charge traitée présente généralement une température d'ébullition inférieure à 350°C, de préférence inférieure à 300°C et de façon très préférée inférieure à 250°C.

### -Description de l'étape d'hydrodésulfuration catalytique (étape b)

L'étape d'hydrodésulfuration est mise en oeuvre pour réduire la teneur en soufre de la fraction lourde à traiter. Sa mise en oeuvre est particulièrement nécessaire lorsque la charge à désulfurer contient plus de 100 ppm poids de soufre et de façon plus générale plus de 50 ppm poids de soufre.

L'étape d'hydrodésulfuration consiste à mettre en contact la fraction lourde à traiter avec de l'hydrogène, dans un ou plusieurs réacteurs d'hydrodésulfuration en série, contenant un ou plusieurs catalyseurs adaptés pour réaliser l'hydrodésulfuration.

Selon un mode préféré de réalisation de l'invention, l'étape b) sera mise en oeuvre dans le but de réaliser une hydrodésulfuration de façon sélective, c'est-à-dire avec un taux d'hydrogénation des mono-oléfines inférieur à 80%, de préférence inférieur à 70% et de façon très préférée inférieure à 60%.

La pression d'opération de cette étape est généralement comprise entre 0,5 MPa et 5 MPa et de préférence entre 1 MPa et 3 MPa. La température est généralement comprise entre 200°C et 400°C et de préférence entre 220°C et 380°C. Dans le cas où l'étape b) d'hydrodésulfuration est effectuée dans plusieurs réacteurs en série, la température moyenne d'opération de chaque réacteur est généralement supérieure d'au moins 5°C, de préférence d'au moins 10°C et de façon très préférée d'au moins 15°C à la température d'opération du réacteur qui le précède.

La quantité de catalyseur mise en oeuvre dans chaque réacteur est généralement telle que le rapport entre le débit d'essence à traiter exprimé en m³ par heure aux conditions standards, par m³ de catalyseur (également appelé vitesse spatiale) est compris entre 0,5 h⁻¹ et 20 h⁻¹ et de préférence entre 1 h⁻¹ et 15 h⁻¹. De façon très préférée, le premier réacteur sera opéré avec une vitesse spatiale comprise entre 2 h⁻¹ et 8 h⁻¹.

Le débit d'hydrogène est généralement tel que le rapport entre le débit d'hydrogène exprimé en normaux m³ par heure (Nm³/h) et le débit de charge à traiter exprimé en m³ par heure aux conditions standards est compris entre 50 Nm³/m³ et 1000 Nm³/m³, de préférence entre 70 Nm³/m³ et 800 Nm³/m³.

Le taux de désulfuration atteint au cours de cette étape d'hydrodésulfuration est généralement supérieur à 50% et de préférence supérieur à 70%. Le taux de désulfuration dépend de la teneur en soufre de la charge à traiter, mais il est tel que le produit issu de l'étape b) contient moins de 100 ppm poids de soufre et de façon préférée moins de 50 ppm poids de soufre.

Tout catalyseur connu de l'homme de l'art pour promouvoir les réactions de transformation du soufre organique en H₂S en présence d'hydrogène peut être utilisé dans le cadre de l'invention. Toutefois, selon un mode particulier de réalisation de l'invention, il est préféré l'utilisation de catalyseurs présentant une bonne sélectivité vis-à-vis des réactions d'hydrodésulfuration. A titre d'exemple, il est possible d'utiliser des catalyseurs qui comprennent un support minéral amorphe et poreux sélectionné dans le groupe constitué par les alumines, le carbure de silicium, la silice, les silice-alumines, l'oxyde de titane, l'oxyde de magnésium, ces deux derniers oxydes étant utilisés seul ou en mélange avec l'alumine ou la silice-alumine. Il est de préférence choisi dans le groupe constitué par la silice, la famille des alumines de transition et les silice-alumines. De manière très préférée, le support est essentiellement constitué par au moins une alumine de transition, c'est-à-dire qu'il comprend au moins 51 % poids, de préférence au moins 60 % poids, de manière très préféré au moins 80 % poids, voire au moins 90 % poids d'alumine de transition. Il peut éventuellement être constitué uniquement d'une alumine de transition. La surface spécifique du support est généralement inférieure à 200 m²/g et de manière préférée inférieure à 150 m²/g. La porosité du catalyseur avant sulfuration est généralement telle que celui-ci possède un diamètre moyen de pore supérieur à 20 nm, de manière préférée supérieur à 25 nm voire 30 nm et souvent compris entre 20 et 140 nm, de préférence entre 20 et 100 nm, et très préférentiellement entre 25 et 80 nm. Le diamètre de pore est mesuré par porosimétrie au mercure selon la norme ASTM D4284-92 avec un angle de mouillage de 140°.

Le catalyseur d'hydrodésulfuration contient généralement au moins un métal du groupe VIB et/ou au moins un métal du groupe VIII sur un support (les groupes VIB et VIII selon la classification CAS correspondent respectivement au métaux des groupes 6 et des groupes 8 à 10 de la nouvelle classification IUPAC selon CRC Handbook of Chemistry and Physics, éditeur CRC press, rédacteur en chef D.R. Lide, 81ème édition, 2000-2001). Le métal du groupe VIB est généralement le molybdène ou le tungstène le métal du groupe VIII est généralement le nickel ou le cobalt. La densité surfacique du métal du groupe VIB est généralement comprise selon l'invention entre 2.10⁻⁴ et 4,0.10⁻³ gramme d'oxyde dudit métal par m² de support, de préférence entre 4.10⁻⁴ et 1,6.10⁻³ gramme d'oxyde dudit métal par m² de support.

De façon très préférée, on utilisera un catalyseur ou un enchaînement de catalyseurs tels que décrits dans la demande de brevet US20060000751A1. Ce sont des catalyseurs comprenant un support, par exemple choisi parmi les oxydes rétractaires tels que les alumines, les silices, les silice-alumines ou la magnésie, utilisés seuls ou en mélange entre eux, un métal du groupe VIB, de préférence le molybdène ou le tungstène promu ou non par un métal du groupe VIII, de préférence le cobalt ou le nickel. Ces catalyseurs présentent un diamètre moyen de pores supérieur à 22 nm. Dans le cas éventuel d'un enchaînement de catalyseur, le procédé comprend une succession d'étapes d'hydrodésulfuration, telle que l'activité du catalyseur d'une étape n+1 est comprise entre 1% et 90% de l'activité du catalyseur de l'étape n.

### -Étape de séparation de l'hydrogène et de l'H₂S (étape c)

Cette étape est mise en oeuvre afin de séparer l'excès d'hydrogène ainsi que l'H₂S de la fraction lourde. A titre d'illustration, l'étape c) est de préférence réalisée de la façon suivante. Après l'étape b) d'hydrodésulfuration, le mélange réactionnel est refroidi, à une température généralement inférieure à 80°C et de préférence inférieure à 60°C afin de condenser les hydrocarbures. Les phases gaz et liquide sont séparées dans un ballon de séparation. La fraction liquide qui contient l'essence désulfurée ainsi qu'une fraction de l'H₂S dissout est envoyée vers une section de stripage, la fraction gazeuse constituée principalement d'hydrogène et qui contient la majorité de l'H₂S est envoyée vers une section de purification. Le stripage peut être réalisée en chauffant la fraction hydrocarbonée dans une colonne de distillation afin d'extraire, en tête, les composés légers entraînés par dissolution dans la fraction liquide ainsi que l'H₂S résiduel dissous. La température de l'essence strippée récupérée en fond de colonne est généralement comprise entre 120°C et 250°C.

L'étape c) est de préférence mise en oeuvre afin que le soufre sous forme d'H₂S restant dans l'essence, avant l'étape d'adsorption e), représente au plus 30% voire 20% voire 10% du soufre total présent dans la fraction hydrocarbonée traitée.

### -Étape de désulfuration par adsorption (étape e)

L'essence obtenue après hydrodésulfuration catalytique (étape b) et après séparation des gaz tels que l'hydrogène et l'H₂S (étape c) est envoyée vers une étape d'adsorption (étape e). Cette étape d'adsorption est réalisée par la mise en contact de l'hydrocarbure produit avec un solide adsorbant présentant une forte affinité à la fois pour les composés soufrés non convertis tels que les composés thiophéniques déjà présents dans l'essence de craquage à désulfurer et pour les mercaptans de recombinaison produits lors de l'étape d'hydrodésulfuration catalytique.

L'adsorbant contient au moins du nickel. L'adsorbant est mis en oeuvre sous forme réduite.

La teneur en nickel sous forme réduite de l'adsorbant est supérieure à 40% poids. La teneur en métal sous forme réduite de l'adsorbant est calculée ainsi:
teneur en nickel réduit = [(masse de nickel sous forme réduite)/(masse de l'adsorbant)]*100.

L'adsorbant peut comprendre un support à base d'oxyde métallique ou un liant à base d'oxyde métallique, l'oxyde métallique étant sélectionné dans le groupe constitué par les familles suivantes : les silices, les alumines, les silice-alumines ainsi que les zéolites. De préférence, une alumine est choisie. La surface BET de ladite alumine est généralement la plus élevée possible afin de favoriser le contact entre la charge et le solide. La surface BET du support est de préférence supérieure à 100 m2/g, de manière plus préférée supérieure à 125 m2/g et de manière très préférée supérieure à 150 m2/g.

La désulfuration par adsorption fait intervenir la chimisorption des molécules soufrées sur le support et ce phénomène nécessite l'apport d'une énergie d'activation. Par conséquent la température de travail est supérieure à 40°C, de préférence supérieure à 50°C, manière préférée supérieure à 75°C et de manière très préférée supérieure à 100°C. La charge doit de préférence rester liquide ce qui nécessite une pression suffisante et supérieure à la pression de vaporisation de la charge.

L'adsorbant est mis en oeuvre en absence d'hydrogène à une température comprise entre 40°C et 300°C, de préférence entre 100°C et 250°C, de manière préférée entre 130°C et 240°C et de manière encore plus préférée entre 140°C et 240°C.

La Vitesse Volumique Horaire (VVH) est définie comme le débit volumique de charge en entrée par volume d'adsorbant utilisé et est de préférence comprise entre 0,1 h⁻¹ et 20 h⁻¹, de manière plus préférée entre 0,5 h⁻¹ et 15 h⁻¹ et de façon très préférée entre 0,5 h⁻¹ et 10 h⁻¹.

Avant utilisation du solide, il est nécessaire de réduire le nickel contenu dans la masse de captation. Plusieurs solutions peuvent être envisagées pour réaliser cette étape de réduction. Le nickel peut être réduit par imprégnation d'un composé organique oxygéné tel qu'une cétone, un aldéhyde, un alcool, un acide carboxylique, qui suite à un traitement thermique servira d'agent réducteur (voir la demande de brevet FR2642670). Ce mode de réduction peut également être mis en oeuvre en présence d'un additif halogéné (voir la demande de brevet FR2680703). Le nickel peut également être réduit sous un flux d'hydrogène afin de former du nickel réduit. La température finale de réduction devra être supérieure à 150°C, de préférence supérieure à 250°C et encore de préférence supérieure à 400°C. On vise à réduire de manière très préférée plus de 30% , voire plus de 40% et voire plus de 50% du nickel dispersé en surface des cristallites.

Il est par ailleurs connu que le nickel réduit tend à s'échauffer lorsqu'il est manipulé sous air, du fait de leur réactivité vis-à-vis de l'oxygène. Il peut donc être avantageux, tout en restant dans le cadre de l'invention, d'utiliser des masses de captation réduites qui ont subi une étape de passivation superficielle. Par étape de passivation superficielle, on entend une étape de neutralisation de la réactivité du solide avec l'oxygène de l'air, par un traitement réversible. Les méthodes les plus répandues de passivation consistent à réaliser une oxydation partielle et surfacique du nickel sous air ou bien de passiver le nickel par adsorption de dioxyde de carbone, ou encore d'enrober le solide dans une paraffine qui constitue une couche protectrice.

### Schémas pouvant être mis en oeuvre dans le cadre de l'invention.

Tout en restant dans le cadre de l'invention, différents schémas peuvent être mis en oeuvre afin de produire, à moindre coût, une essence désulfurée. Le choix du schéma optimal dépend en fait des caractéristiques des essences à traiter et à produire ainsi que des contraintes propres à chaque raffinerie.

A titre d'illustration et sans que cela soit limitatif, les schémas ci-dessous peuvent être envisagés, tout en restant dans le cadre de l'invention.
Selon une première variante, l'étape e) de captation peut être mis en oeuvre directement en série avec l'étape c) de séparation. En particulier, dans le cas où l'étape c) de séparation est réalisée à une température compatible avec la température d'opération de l'étape e) de captation, l'effluent issu de l'étape c) sera directement envoyé dans l'étape e). Il peut également être envisagé d'ajuster la température entre les étapes c) et e) au moyen de dispositifs d'échange thermique.
Selon une deuxième variante, avant l'étape e) de captation du soufre, il peut aussi être envisager de mélanger à l'essence issue de l'étape c), une autre essence contenant du soufre telle que, par exemple, les essences de distillation du pétrole brut, les essences issues de tout procédé de craquage telles que les essences issues de pyrolyse, de procédés de cokéfaction ou d'hydrocraqueur. L'essence est distillée en deux fractions, une fraction légère et une fraction lourde, la fraction lourde est traitée par l'étape b) d'hydrodésulfuration, les fractions légère et lourde sont remélangées avant ou après l'étape c) de séparation de l'H₂S, et de traiter conjointement les fractions légères et lourdes dans l'étape e) de captation. Ce schéma présente l'avantage de ne pas hydrotraiter la fraction légère qui est riche en oléfines mais généralement pauvre en soufre, ce qui peut permettre, au global, de limiter la perte d'octane.
Selon une troisième variante, il est possible de traiter l'essence contenant du soufre dans une première étape consistant à convertir les composés soufrés saturés légers de type mercaptans en composés soufrés plus lourds. Ce type de traitement peut être réalisé, soit par une méthode d'oxydation des mercaptans en disulfures connue de l'homme du métier, soit, par une méthode de traitement à l'hydrogène dans des conditions douces telle que décrite dans la demande de brevet EP-A-1077247. La fraction hydrocarbonée ainsi produite peut être distillée en au moins deux coupes, de préférence en trois coupes, une coupe légère, une coupe intermédiaire et une coupe lourde. Dans le cas de trois coupes, chacune des coupe intermédiaire et lourde est traitée séparément dans une étape d'hydrodésulfuration (étape b), puis une étape de séparation (étape c) et l'étape de captation des composés soufrés (étape e) est mise en oeuvre sur les effluents des étapes e) ou sur leur mélange.
En conclusion, l'invention concerne un procédé de traitement d'une essence contenant du soufre et des composés oléfiniques comprenant les étapes suivantes:
   a) une étape de distillation de l'essence en deux fractions, une fraction légère et une fraction ; lourde
   b) une étape d'hydrodésulfuration de ladite fraction lourde afin de produire un effluent appauvri en soufre consistant à faire passer ladite fraction lourde en mélange avec de l'hydrogène sur au moins un catalyseur d'hydrodésulfuration
   c) une étape de séparation de la fraction lourde partiellement désulfurée, de l'hydrogène introduit en excès ainsi que de l'H₂S formée lors de l'étape b);
   d) une étape de mélange des fractions lourde et légère avant ou après l'étape c) de séparation de l'H2S;
   e) une étape de captation des composés soufrés consistant à mettre en contact la fraction légère mélangée à la fraction lourde partiellement désulfurée issue de l'étape c) avec un adsorbant comprenant du nickel, l'adsorbant étant mis en oeuvre sous forme réduite en absence d'hydrogène à une température comprise entre 40°C et 300°C, la teneur en métal sous forme réduite de l'adsorbant étant supérieure à 40% poids.

De manière préférée, l'adsorbant comprend un support à base d'oxyde métallique ou un liant à base d'oxyde métallique, l'oxyde métallique étant sélectionné dans le groupe constitué par les familles suivantes : les silices, les alumines, les silice-alumines ainsi que les zéolites.

### Exemple 1 (selon l'art antérieur) :

Un catalyseur α d'hydrodésulfuration est obtenu par imprégnation « sans excès de solution » d'une alumine de transition se présentant sous forme de billes de surface spécifique de 130 m2/g et de volume poreux 0,9 ml/g, par une solution aqueuse contenant du molybdène et du cobalt sous forme d'heptamolybdate d'ammonium et de nitrate de cobalt. Le catalyseur est ensuite séché et calciné sous air à 500°C. La teneur en cobalt et en molybdène de cet échantillon est de 3% poids de CoO et 10 % poids de MoO3.

100 ml du catalyseur A sont placés dans un réacteur d'hydrodésulfuration tubulaire à lit fixe. Le catalyseur est tout d'abord sulfuré par traitement pendant 4 heures sous une pression de 3,4 MPa à 350°C, au contact d'une charge constituée de 2% poids de soufre sous forme de diméthyldisulfure dans du n-heptane.

La charge traitée est une essence de craquage catalytique dont le point initial d'ébullition est de 50°C et le point final de 225°C et dont le MON est de 80.6 et le RON de 92.5. Sa teneur en soufre est de 1650 ppm poids et son indice de brome (IBr) est de 69 g/100 g, ce qui correspond, approximativement à 36 % poids d'oléfines.

Cette charge est traitée sur le catalyseur α, sous une pression de 1,5 MPa, un rapport volumique hydrogène sur charge à traiter (H₂/HC) de 300 l/l et une WH de 3 h⁻¹. Après traitement, le mélange d'essence et d'hydrogène est refroidi, l'hydrogène riche en H₂S est séparé de l'essence liquide, et l'essence est soumise à un traitement de stripage par injection d'un flux d'hydrogène afin d'éliminer les traces résiduelles d'H₂S dissous dans l'essence.

Le tableau 1 montre l'influence de la température sur les taux de désulfuration et saturation des oléfines.

**Tableau 1**

| **Références de l'essence hydrodésulfurée** | A1 | A2 | A3 | A4 |
|---|---|---|---|---|
| Température, °C | 290 | 300 | 310 | 320 |
| Mercaptans, ppm poids | 31,2 | 24,7 | 18,1 | 10,2 |
| Soufre total, ppm poids | 55,6 | 30,0 | 19,8 | 10,8 |
| Taux de désulfuration, % | 96,5% | 98,2% | 98,8% | 99,3% |
| Taux d'hydrogénation des oléfines,% | 30,8% | 38,2% | 46,5% | 55,6% |
| Delta MON | 1,3 | 1,5 | 1,9 | 2,2 |
| Delta RON | 3,7 | 4,7 | 5,5 | 7,2 |

Les températures opératoires requises pour atteindre 10 ppm de soufre avec ce type d'essence est élevée. Dans ces conditions, il est possible d'atteindre des taux de désulfuration supérieurs à 99 %, mais le taux de saturation des oléfines devient alors très élevé (supérieur à 55%, voir l'essence hydrodésulfurée A4).

### Exemple 2 : Influence de la masses de captation

L'essence A1 telle que décrite dans l'exemple 1 est utilisée afin de comparer les performances de différentes masses de captation du soufre. Avant mise en oeuvre, chacune de ces trois masses est réduite sous hydrogène dans un réacteur tubulaire contenant 50 ml de ladite masse. Trois masses de captation ont été évaluées :

La masse β1 commercialisée par la société Axens sous la référence LD341 est composée d'un support à base d'alumine et de moins de 20% poids de Nickel. Après réduction, la masse β1 contient moins de 21% poids de Nickel réduit. Cette masse ne rentre pas dans le champ de l'invention car elle contient moins de 25% poids de nickel réduit.

La masse β2, commercialisée par la société Axens sous la référence AX746 contient entre 25% et 30% poids de nickel sur un support poreux minéral à base d'alumine. Après réduction, la masse β2 contient plus de 25% poids de Nickel réduit.

La masse β3 commercialisée par la société Axens sous la référence LD746 contient plus de 50% poids de nickel, sur un support poreux minéral à base de silice alumine. Après réduction, la masse β3 contient plus de 40% poids de Nickel réduit.

Pour chaque masse, l'échantillon de 50 ml qui se trouve dans le réacteur tubulaire et chauffé à 160°C en absence d'hydrogène (un balayage intermédiaire à l'azote étant réalisé afin de chasser l'hydrogène utilisé lors de la réduction). L'essence A1 contenant 55,6 ppm poids de soufre dont 31,2 ppm poids de soufre sous forme de mercaptans est injectée avec un débit de 150 ml/h et sous une pression de 2 MPa dans le réacteur.

Au bout de 24h puis de 400 heures de fonctionnement, un échantillon de recette est récupéré et analysé.

**Tableau 2**

| Masse de captation | Temps d'opération | Teneur en soufre | Teneur en mercaptans | Taux de captation du soufre |
|---|---|---|---|---|
| β1 (comparatif) | 24 heures | 22,6 | 2,0 | 0,60 |
| | 400 heures | 52,3 | 30,3 | 0,06 |
| β2 (compararif) | 24 heures | 18,7 | 0,7 | 0,68 |
| | 400 heures | 27,7 | 6,2 | 0,51 |
| β3 (selon l'invention) | 24 heures | 12,3 | 0,0 | 0,79 |
| | 400 heures | 19,9 | 1,9 | 0,66 |

Les trois masses évaluées permettent de retenir plus de 60% du soufre au bout de 24 heures, toutefois, seules les masses β2 et β3 permettent de capter plus de 50% du soufre après 400 heures d'opération.

### Exemple 3 : Influence de la température de captation

L'essence A1 contenant 55,6 ppm poids de soufre dont 31,2 ppm de mercaptans issue de l'exemple 1 est injectée, à un débit de 150 ml/h, à une pression de 2 MPa dans un réacteur tubulaire rempli de 50 ml de masse β3. La température est ajustée à 35°C, 100°C puis 160°C. La même expérience est réalisée à partir de l'essence A2 contenant 30 ppm poids de soufre dont 24,7 ppm poids de mercaptans. A chaque température, un échantillon de produit est prélevé et analysée. Le tableau 3 présente les teneurs en soufre et en mercaptans ainsi mesurés.

**Tableau 3**

| **Captation à 35°C** | A11 | A21 |
|---|---|---|
| Mercaptans, ppm poids | 30,4 | 24,8 |
| Soufre total, ppm poids | 54,1 | 29,9 |
| | | |

| **Captation à 100°C** | A12 | A22 |
|---|---|---|
| Mercaptans, ppm poids | 17,6 | 14,2 |
| Soufre total, ppm poids | 45,4 | 20,2 |
| | | |

| **Captation à 160°C** | A13 | A23 |
|---|---|---|
| Mercaptans, ppm poids | 2,9 | 2,3 |
| Soufre total, ppm poids | 18,1 | 7,3 |

Les essences A11, A12 et A13 sont issues du traitement de l'essence A1 sur la masse β3.

Les essences A21, A22 et A23 sont issues du traitement de l'essence hydrodésulfurée A2 sur la masse β3.

Il est clair, au vu de cet exemple, que la mise en oeuvre de la masse de captation à 35°C ne permet pas de capter une grande quantité de soufre comparativement à la mise en oeuvre à 100°C et 160°C. Par contre, en opérant la masse de captation à 100°C et encore mieux à 160°C, il est possible de produire des essences à faible teneur en soufre comparativement à celles produites en opérant la masse de captation à 35°C. Dans le cas où la température est de 160°C, la masse capte la quasi-totalité des mercaptans, et une fraction importante des autres composés soufrés.

### Comparaisons des exemples 1 et 3

Les essences A13 et A23 ont été analysées en détail afin de les comparer aux essences A3 et A4 issues de l'exemple 1. Le tableau 4 rassemble les résultats de ces analyses.

**Tableau 4**

| | Essences issues de l'exemple 1 | | Essences issues de l'exemple 3 | |
|---|---|---|---|---|
| **Références de l'essence** | A3 | A4 | A13 | A23 |
| Mercaptans, ppm poids | 18,1 | 10,2 | 2,9 | 2,3 |
| Soufre total, ppm poids | 19,8 | 10,8 | 18,1 | 7,3 |
| Taux de désulfuration, % par rapport à l'essence A | 98,8% | 99,3% | 98,9% | 99,6% |
| Taux de saturation des oléfines,% comparé à l'essence A | 46,5% | 55,6% | 30,8% | 38,2% |
| Delta MON | 1,9 | 2,2 | 1,3 | 1,5 |
| Delta RON | 5,5 | 7,2 | 3,7 | 4,7 |

Les essences A3 et A13 présentent des teneurs en soufre total similaires. Par contre, l'essence A13 contient une fraction de mercaptans beaucoup plus réduite, ce qui induit un caractère corrosif nettement plus faible. De plus, la perte d'octane de l'essence A13 (RON ou MON) est beaucoup plus faible que la perte d'octane de l'essence A3. L'essence A13 qui présente de meilleurs indices d'octane est donc de meilleure qualité.

De même, les essences A4 et A23 présentent des teneurs en soufre total similaires. Par contre, l'essence A23 contient une fraction de mercaptans réduite, d'où un caractère corrosif très faible. De plus, la perte d'octane de l'essence A23 est beaucoup plus faible que la perte d'octane de l'essence A4. L'essence A23 qui présente, par ailleurs, de meilleurs indices d'octane est donc de meilleure qualité.

Cet exemple illustre comment la mise en oeuvre d'un enchaînement d'une étape d'hydrodésulfuration et d'une étape complémentaire de captation des composés soufrés, sur un adsorbant selon l'invention et dans des conditions opératoires conformes à l'invention, permet d'améliorer significativement la qualité de l'essence, par rapport à un traitement par procédé d'hydrodésulfuration seul. Par ailleurs, du fait de la mise en oeuvre de l'étape de captation, la température opératoire de l'étape d'hydrodésulfuration est significativement abaissée, ce qui permet d'améliorer la durée de vie du catalyseur de l'étape d'hydrodésulfuration, ainsi que la consommation d'énergie.

## Revendications

1. Procédé de traitement d'une essence contenant du soufre et des composés oléfiniques, comprenant les étapes suivantes:
a) une étape de distillation de l'essence en deux fractions, une fraction légère et une fraction lourde;
b) une étape d'hydrodésulfuration de ladite fraction lourde afin de produire un effluent appauvri en soufre consistant a faire passer ladite fraction lourde en mélange avec de l'hydrogène sur au moins un catalyseur d'hydrodésulfuration;
c) une étape de séparation de la fraction lourde partiellement désulfurée, de l'hydrogène introduit en excès ainsi que de l'H2S formée lors de l'étape b);
d) une étape de mélange des fractions lourde et légère avant ou après l'étape c) de séparation de l'H2S;
e) une étape de captation des composes soufres consistant à mettre en contact la fraction légère mélangée à la fraction lourde partiellement désulfurée issue de l'étape c) avec un adsorbant comprenant du nickel, l'adsorbant étant mis en oeuvre sous forme réduite en absence d'hydrogène a une temperature comprise entre 40°C et 300°C, la teneur en nickel sous forme réduite de l'adsorbant étant supérieure à 40% poids.

2. Procédé selon la revendication 1, dans lequel l'adsorbant comprend un support à base d'oxyde métallique ou un liant à base d'oxyde métallique, l'oxyde métallique étant sélectionné dans le groupe constitué par les familles suivantes : les silices, les alumines, les silice-alumines ainsi que les zéolites.

3. Procédé selon l'une des revendications précédentes dans lequel l'étape b) d'hydrodésulfuration consiste à mettre en contact l'essence à traiter avec de l'hydrogène, dans un ou plusieurs réacteurs d'hydrodésulfuration en série, contenant un ou plusieurs catalyseurs adaptés pour réaliser l'hydrodésulfuration.

4. Procédé selon l'une des revendications précédentes dans lequel la pression d'opération de l'étape d'hydrodésulfuration est comprise dans le ou les réacteurs entre 0,5 MPa et 5 MPa et la température est comprise dans le ou les réacteurs entre 200°C et 400°C.

5. Procédé selon l'une des revendications 3 ou 4 dans lequel dans le cas où l'étape b) d'hydrodésulfuration est effectuée dans plusieurs réacteurs en série, la température moyenne d'opération de chaque réacteur de l'étape d'hydrodésulfuration est supérieure d'au moins 5°C à la température d'opération du réacteur qui le précède.

6. Procédé selon l'une des revendications 3 à 5 dans lequel le ou les catalyseurs utilisés dans l'étape d'hydrodésulfuration comprennent un support minéral amorphe et poreux sélectionné dans le groupe constitué par les alumines, le carbure de silicium, la silice, les silice-alumines, l'oxyde de titane, l'oxyde de magnésium, ces deux derniers oxydes étant utilisés seul ou en mélange avec l'alumine ou la silice-alumine, la surface spécifique du support est inférieure à 200 m²/g, la porosité du catalyseur avant sulfuration est telle que celui-ci possède un diamètre moyen de pores supérieur à 20 nm, catalyseur contient au moins un métal du groupe VIB et/ou au moins un métal du groupe VIII sur ledit support, la densité surfacique du métal du groupe VIB est comprise entre 2.10⁻⁴ et 4,0.10⁻³ gramme d'oxyde dudit métal par m² de support.

7. Procédé selon l'une des revendications précédentes dans lequel dans l'étape c), le mélange réactionnel est refroidi, à une température inférieure à 80°C afin de condenser les hydrocarbures, les phases gaz et liquide sont séparées dans un ballon de séparation, la fraction liquide qui contient l'essence désulfurée ainsi qu'une fraction de l'H2S dissous est envoyée vers une section de stripage, la fraction gazeuse constituée principalement d'hydrogène et qui contient la majorité de l'H2S est envoyée vers une section de purification.

8. Procédé selon la revendication 7 dans lequel le stripage est réalisé par chauffage de l'essence dans une colonne à distiller qui permet de récupérer en tête, les composés légers incondensables dont les traces résiduelles d'H2S.

9. Procédé selon l'une des revendications précédentes dans lequel l'essence est traitée avant l'étape a) dans une première étape consistant à convertir les composés soufrés saturés légers de type mercaptans en composés soufrés plus lourds.

10. Procédé selon la revendications 9 dans lequel l'essence ainsi produite est distillée en trois coupes, une coupe légère, une coupe intermédiaire et une coupe lourde, chacune des coupe intermédiaire et lourde étant traitées séparément dans une étape d'hydrodésulfuration (étape b), puis une étape de séparation (étape c), l'étape de captation (étape e) des composés soufrés étant mise en oeuvre sur le mélange des effluents issus de l'étape de séparation.

## Patentansprüche

1. Verfahren zur Behandlung eines Benzins, der Schwefel und Olefinverbindungen enthält, umfassend die folgenden Schritte:
a) einen Destillationsschritt des Benzins in zwei Fraktionen, eine leichte Fraktion und eine schwere Fraktion;
b) einen Hydroentschwefelungsschritt der schweren Fraktion, um ein an Schwefel armen Abstrom zu erzeugen, darin bestehend, die schwere Fraktion in Mischung mit Wasserstoff über mindestens einen Hydroentschwefelungskatalysator zu leiten;
c) einen Schritt der Trennung der teilweise entschwefelten schweren Fraktion von dem überschüssig eingeleiteten Wasserstoff sowie dem in Schritt b) gebildeten H2S;
d) einen Schritt des Mischens der schweren und leichten Fraktionen vor oder nach dem Schritt c) der Trennung von dem H2S;
e) einen Schritt des Einfangens der Schwefelverbindungen, darin bestehend, die mit der aus Schritt c) stammenden, teilweise entschwefelten, schweren Fraktion gemischte leichte Fraktion mit einem Adsorbens, umfassend Nickel, in Kontakt zu bringen, wobei das Adsorbens in reduzierter Form ohne Wasserstoff bei einer Temperatur zwischen 40°C und 300°C eingesetzt wird, wobei der Gehalt des Adsorbens an Nickel in reduzierter Form größer als 40 Gew.-% ist.

2. Verfahren nach Anspruch 1, bei dem das Adsorbens einen Träger auf Basis von Metalloxid oder ein Bindemittel auf Basis von Metalloxid umfasst, wobei das Metalloxid in der Gruppe ausgewählt ist, die von folgenden Familien gebildet ist: den Siliziumoxiden, den Aluminiumoxiden, den Silizium-Aluminiumoxiden sowie den Zeolithen.

3. Verfahren nach einem der vorhergehenden Ansprüche, bei dem der Schritt b) der Hydroentschwefelung darin besteht, das zu behandelnde Benzin mit Wasserstoff in einem oder mehreren in Serie geschalteten Hydroentschwefelungsreaktoren, die einen oder mehreren Katalysator umfassen, die geeignet sind, die Hydroentschwefelung durchzuführen, in Kontakt zu bringen.

4. Verfahren nach einem der vorhergehenden Ansprüche, bei dem der Betriebsdruck des Hydroentschwefelungsschritts in dem oder den Reaktoren zwischen 0,5 MPa und 5 MPa und die Temperatur in dem oder den Reaktoren zwischen 200°C und 400°C beträgt.

5. Verfahren nach einem der Ansprüche 3 oder 4, bei dem, falls der Schritt b) der Hydroentschwefelung in mehreren in Serie geschalteten Reaktoren erfolgt, die durchschnittliche Betriebstemperatur jedes Reaktors des Hydroentschwefelungsschritts um mindestens 5°C höher als die Betriebstemperatur des vorangestellten Reaktors ist.

6. Verfahren nach einem der Ansprüche 3 bis 5, bei dem der oder die in dem Hydroentschwefelungsschritt verwendeten Katalysatoren einen amorphen mineralischen und porösen Träger umfassen, der in der Gruppe ausgewählt ist, die von den Aluminiumoxiden, Siliziumkarbid, Siliziumoxid, den Silizium-Aluminiumoxiden, Titanoxid, Magnesiumoxid gebildet ist, wobei diese zwei letztgenannten Oxide alleine oder in Mischung mit dem Aluminiumoxid oder dem Silizium-Aluminiumoxid verwendet werden, wobei die spezifische Fläche des Trägers kleiner als 200 m²/g ist, wobei die Porosität des Katalysators vor der Schwefelung derart ist, dass dieser einen durchschnittlichen Porendurchmesser von mehr als 20 nm besitzt, wobei der Katalysator mindestens ein Metall der Gruppe VIB und/oder mindestens ein Metall der Gruppe VIII auf dem Träger enthält, wobei die Oberflächendichte des Metalls der Gruppe VIB zwischen 2.10⁻⁴ und 4,0.10⁻³ Gramm Oxid des Metalls pro m² Träger beträgt.

7. Verfahren nach einem der vorhergehenden Ansprüche, bei dem in Schritt c) die Reaktionsmischung bei einer Temperatur unter 80°C gekühlt wird, um die Kohlenwasserstoff zu kondensieren, wobei die Gas- und Flüssigphasen einem Trennbehälter getrennt werden, wobei die flüssige Phase, die den entschwefelten Benzinstoff sowie eine Fraktion des gelösten H2S enthält, zu einer Strippzone geschickt wird, wobei die gasförmige Fraktion, die hauptsächlich von Wasserstoff gebildet ist und die Mehrheit des H2S enthält, zu einer Reinigungszone geschickt wird.

8. Verfahren nach Anspruch 7, bei dem das Strippen durch Erhitzen des Benzins in einer Destillationskolonne erfolgt, die es ermöglicht, am Kopf die leichten, nicht kondensierbaren Verbindungen, unter anderem die Restspuren von H2S, wiederzugewinnen.

9. Verfahren nach einem der vorhergehenden Ansprüche, bei dem das Benzin vor dem Schritt a) in einem ersten Schritt behandelt wird, darin bestehend die leichten gesättigten Schwefelverbindungen vom Typ Mercaptan in schwerere Schwefelverbindungen umzuwandeln.

10. Verfahren nach Anspruch 9, bei dem das so hergestellte Benzin in drei Fraktionen destilliert wird, eine leichte Fraktion, eine Zwischenfraktion und eine schwere Fraktion, wobei jede der Zwischenfraktion und schweren Fraktion getrennt in einem Hydroentschwefelungsschritt (Schritt b)), dann in einem Trennungsschritt (Schritt c)) behandelt werden, wobei der Schritt der Erfassung (Schritt e)) der Schwefelverbindungen an der Mischung der aus dem Trennungsschritt stammenden Effluente eingesetzt wird.

## Claims

1. Treatment process of a a gasoline comprising sulphur-containing compounds and olefinic compounds , comprising the following steps:
a) a distillation step providing a light and a heavy fractions;
b) a hydrodesulphurization step of said heavy fraction to produce a sulphur-depleted effluent, consisting of passing said heavy fraction mixed with hydrogen over at least one hydrodesulphurization catalyst;
c) a step of separation of the partially desulphurized heavy fraction from the hydrogen introduced in excess, as well as the H₂S formed in step b);
d) a step of mixing the light and heavy fractions before or after step c) of H₂S separation;
e) a step of collecting the sulphurous compounds, consisting of placing the light fraction mixed with the partially desulphurized hydrocarbon fraction originating in step c) in contact with an adsorbent comprising nickel, the adsorbent being used in reduced form in the absence of hydrogen, at a temperature comprised between 40°C and 300°C, the metal content in the reduced form of the adsorbent above 40% by weight.

2. Process according claim 1 in which the adsorbent comprises a support based on a metal oxide or a binder based on a metal oxide, the metal oxide being chosen from the group constituted by the following families: silicas, aluminas, silica-aluminas, as well as zeolites.

3. Process according to one of the previous claims in which hydrodesulphuration step b) consists of placing the gasoline to be treated in contact with hydrogen, in one or more hydrodesulphuration reactors in sequence, containing one or more catalysts suitable for carrying out the hydrodesulfuration.

4. Process according to one of the previous claims in which the operating pressure of the hydrosulfuration step is comprised in the reactor or reactors between 0.5 MPa and 5 MPa and the temperature is comprised in the reactor or reactors between 200°C and 400°C.

5. Process according to one of claims 3 or 4 in which in the case where hydrodesulphurization step a) is carried out in several reactors in sequence, the average operating temperature of each reactor of the hydrodesulphurization step is greater by a least 5°C than the operating temperature of the preceding reactor.

6. Process according to one of claims 3 to 5 in which the catalyst or catalysts used in the hydrodesulphurization step comprise an amorphous and porous mineral support chosen from the group constituted by aluminas, silicon carbide, silica, silica-aluminas, titanium oxide, magnesium oxide, these last two oxides being used alone or mixed with alumina or silica-alumina, the specific surface area of the support is less than 200 m²/g, the porosity of the catalyst before sulphuration is such that the latter has an average pore diameter greater than 20 nm, the catalyst contains at least one metal of group VIB and/or at least one metal of group VIII on said support, the surface density of the metal from group VIB is comprised between 2 x10⁻⁴ and 4.0 x 10⁻³ grams of oxide of said metal per m² of support.

7. Process according to one of the previous claims in which, in step b), the reaction mixture is cooled to a temperature below 80°C in order to condense the hydrocarbons, the gas and liquid phases are separated in a separation flask, the liquid fraction containing the desulphurized gasoline as well as a fraction of the dissolved H₂S is sent to a stripping section, the gaseous fraction constituted principally by hydrogen and which contains the majority of the H₂S is sent to a purification section.

8. Process according to claim 7 in which the stripping is carried out by heating the gasoline in a distillation column which allows the light compounds which cannot be condensed, including the residual traces of H₂S, to be recovered overhead.

9. Process according to one of the preceding claims in which the gasoline is treated before step a) in a first step consisting of converting the mercaptan-type light saturated sulphurous compounds into heavier sulphurous compounds.

10. Process according to claim 9 in which the hydrocarbon fraction thus produced is distilled into three cuts, a light cut, an intermediate cut and a heavy cut, each of the intermediate and heavy cuts being treated separately in a hydrosulphurization step (step b), then a separation step (step c), and the step of collecting the sulphurous compounds (step e) is carried out on the mixture of the effluents issued from the separation step.
